# EUROPEAN PATENT APPLICATION

(11) **EP 0 543 237 A1**
(43) Date of publication of application: **26.05.1993**
(21) Application number: 92119061.7
(22) Date of filing: 06.11.1992
(51) Int. Cl.: H02G 3/18

(54) **Lead-through arrangement**

(30) Priority: 11.11.1991 FI 915320
(71) Applicant: PARTEK CONCRETE OY AB, SF-00501 Helsinki (FI)
(72) Inventor: Korhonen, Juhani, SF-01620 Vantaa (FI)
(74) Representative: Eisenführ, Speiser & Partner

(57) **Abstract**

A lead-through arrangement for passing one or several conductors (7) through a floorboard (1). The floorboard has an aperture (2), in which is fitted a lead-through piece (4) which protects the conductor and which is supported by a flange (5) in the lead-through piece and/or by a shoulder (3, 9) in the aperture. The lead-through piece can be fitted into the aperture in at least two positions turned in relation to its rotational axis (A). In the first position of the lead-through piece (4) the closing surface (11) of the lead-through piece covers the floorboard aperture (2). In the second positioned turned in relation to the rotational axis (A) a gap is formed between the lead-through piece and the edge of the floorboard aperture, through which gap a conductor (7) can be passed by way of the floorboard aperture.

## Description

The present invention concerns a lead-through arrangement for passing one or several conductors through a floorboard, wherein the floorboard is provided with an aperture, into which the lead-through piece protecting the conductor is fitted and is supported by a flange of the lead-through piece and/or by a shoulder in the aperture, and wherein the lead-through piece can be fitted into the aperture in at least two positions turned in relation to its axis of rotation.

The use of mounting floors has become more widespread. Traditionally, such floors have been used in ADP premises and in industrial and technical premises. Nowadays mounting floors are also used in many office premises.

The mounting floor is mounted on top of a base, e.g. a hollow slab. It consists of a basic structure comprising i.a. adjustable legs of an approximate height of 40 - 2000 mm and floorboards supported by the legs and of a size of e.g. 600 mm x 600 mm and a thickness of about 30 - 40 mm.

The space beaneath the floor is suitable for placing i.a. electric and information technology cablings, air-conditioning ducts and fire-extinguishing systems. At places of work the floor should be provided with lead-throughs for cablings. Such a floor structure is described e.g. in DE patent publication 2 353 865.

Premises can be converted when changing the order of work places and when the purpose of use is changed. It must then be possible to change the location of lead-throughs.

To give entire satisfaction, the lead-through must meet the following conditions:
A. In working the floorboard for the lead-through the working method should be easy and suitable for the conditions on the building site. Boring and milling are preferable.
B. The spot load carrying capacity of the floorboard measured at the weakest spot of the board must not become essentially poorer in consequence of working the floorboard.
C. The lead-through must be of such minimum size that it allows an electric plug to pass through. The next essential size is to allow a hand holding a plug to pass through the lead-through. The plug is pushed into a socket located in the bottom/intermediate floor under the mounting floor.
D. When there is no electric or other conductor and the lead-through therefore is not used, there must not be any hole in the floor into which e.g. the leg of a piece of furniture might fall or a thin heel might get caught.
E. When there is an electric or other plug in the socket and the lead-through is thus in use, the lead-through piece or other means must be such that it protects the conductor at the edge of the floor at the place where the conductor enters the room through the mounting floorboard. The risks are that the conductor will come underfoot against the floorboard edge and furniture legs, pushcarts etc.

The lead-through is embodied in the prior art in two ways:
1. A small hole or groove is made by boring/milling the floorboard edge.
   Disadvantages:
   - The board will clearly lose carrying capacity because its edge is its weakest spot. As regards spot load carrying capacity the board edge is the worst possible spot for making the lead-through.
   - Only quite a small (0̸ 10 - 30 mm) hole can be made in order not to reduce the board's carrying capacity radically.
   - Usually, the conductor protection is not implemented. However, a collar means is known wherein protection is implemented.
2. A lead-through which is formed by using three different pieces: 1. a collar part which is attached to the board, 2. a solid piece used when the lead-through is not in use, 3. the lead-through piece proper which is needed when the lead-through is in use.
   Disadvantages:
   - Complicated and rather costly, because the lead-through is formed of three separate pieces.
   - As of the lead-through and solid pieces only one is used, the other part tends to disappear.
   - Prior art lead-through pieces give poor protection to the conductor against breaking.

A lead-through embodiment is described in DE patent publication 3 039 257.

The floorboard lead-through arrangement of the present invention is characterized in that in the first position of the lead-through piece the closing surface of the lead-through piece covers the floorboard aperture; and in that in the second position turned in relation to the axis of rotation a gap is formed between the lead-through piece and the floorboard aperture, by way of which gap a conductor can be passed through the floorboard aperture. According to an advantageous application, the top end of the lead-through channel opens on a side of the lead-through piece, whereby the lead-through piece will nest in the aperture in two positions turned in relation to its vertical axis at two different heights. Thus, with the lead-through piece in its top position, the top end of the lead-through channel opens above floor level. The longitudinal axis of the floorboard aperture may form with the floorboard level an angle α, which is bigger than 90°. In an alternative application the bottom edge of the lead-through piece has downward-protruding projections and the bottom edge of the floorboard aperture has projections protruding towards the central part of the aperture, whereby in the top position of the lead-through piece the aperture projections support the projections of the lead-through piece, while in the lower position of the lead-through piece the projections of the lead-through piece fit in between the aperture projections.

In the arrangement according to the invention the same piece functions in such a way that in its basic position it forms a solid piece, while in its changed position it forms a lead-through piece, at the same time protecting the conductor passing through the floorboard. A collar piece is used if the board material so requires.

The invented lead-through piece meets the above-listed requirements A, B, C, D, E in all respects. The floorboard is worked by boring or milling at a spot which is safe in terms of carrying capacity. It is simpler compared with a conventional three-component piece, because there is essentially only one component (+ a collar, if required).

The invention and its details are described in greater detail in the following, reference being made to the appended drawings, wherein
Figures 1 - 6 are views of an application of the lead-through arrangement according to the invention, so that
Figure 1 is a cross-sectional side view of a floorboard and a lead-through piece fitted into the board aperture in a position where the aperture is closed;
Figure 2 is a similar view with the lead-through piece turned into a position to allow passing through;
Figure 3 is a view of the lead-through piece as seen from the lead-through gap side;
Figure 4 is a view along sectional line IV-IV of Figure 3 with the lead-through piece in the position of Figure 1;
Figure 5 is a view of the lead-through piece seen from above;
Figure 6 is a similar view seen from below;
Figures 7 - 9a are views of another application of the lead-through arrangement of the invention, so that

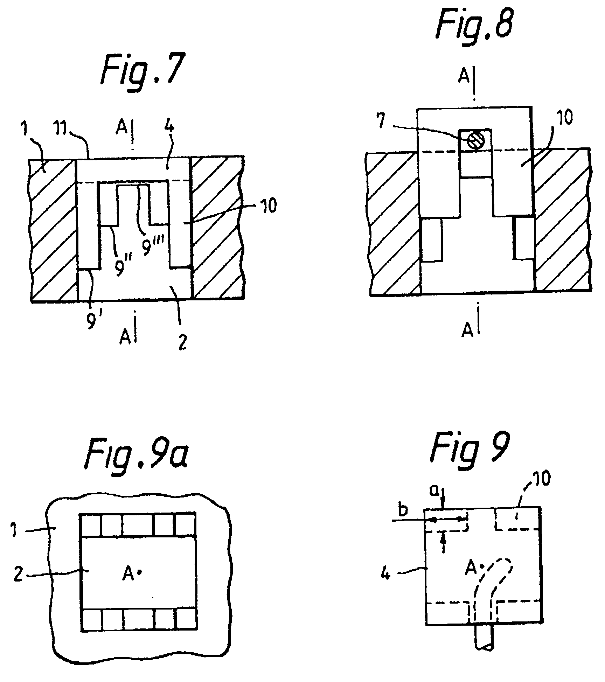

Figure 7 is a side view of the arrangement in its closed position;
Figure 8 is a similar side view in the open position;
Figure 9 is a top view of the position of Figure 8;
Figure 9a is a top view of the floor aperture;

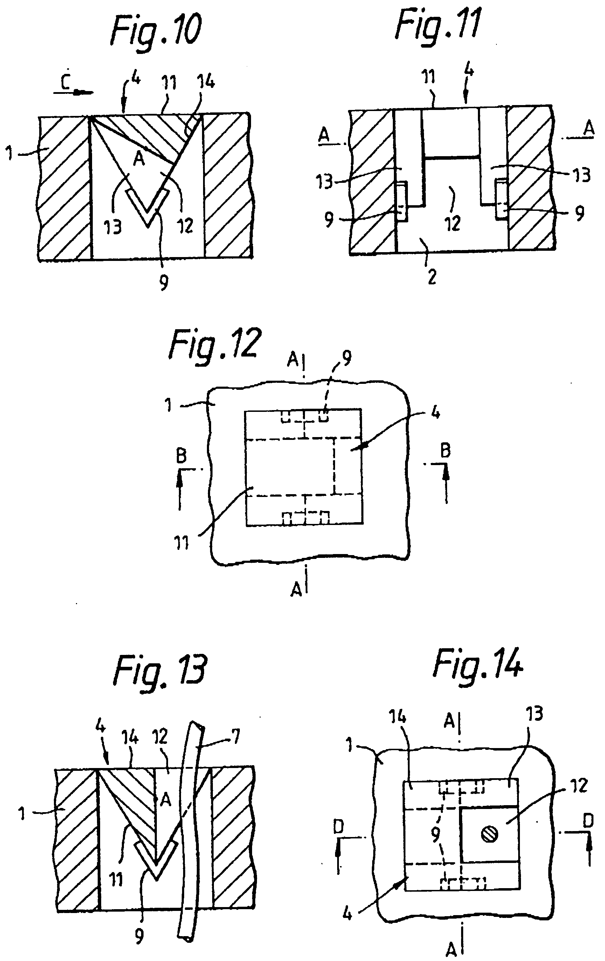

Figures 10 - 14 are views of a third application of the invention, so that
Figure 10 is a view of the lead-through piece in its closed position and along sectional line B - B of Figure 12;
Figure 11 is a side view along arrow C of the lead-through piece in the position of Figure 10;
Figure 12 is a top view of the lead-through piece in its closed position;
Figure 13 is a view of the lead-through piece in its open position and along sectional line D - D of Figure 14;
Figure 14 is a top view of the lead-through piece in its open position;

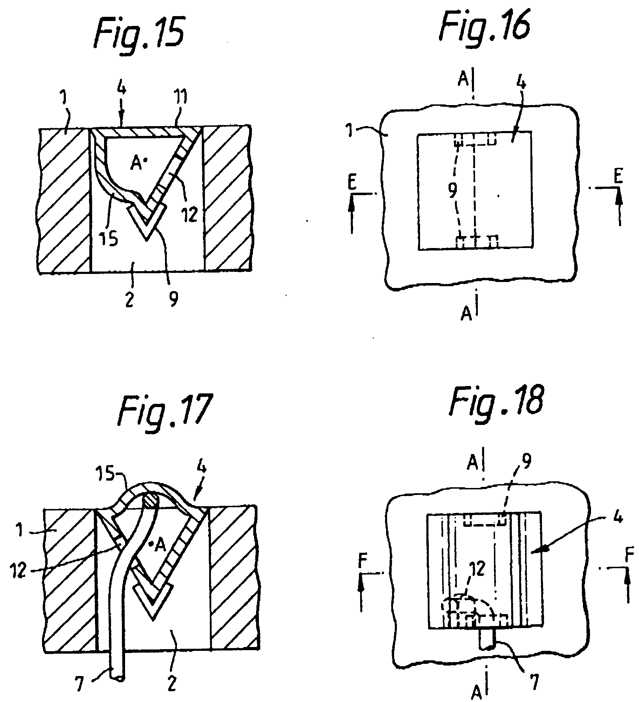

Figures 15 - 18 are views of a fourth application of the invention, so that
Figure 15 is a side view of the lead-through piece in its closed position (sectional line E-E of Figure 16);
Figure 16 is a similar view seen from above;
Figure 17 is a side view of the lead-through piece in its open position (sectional line F-F of Figure 18); and
Figure 18 is a similar view seen from above.

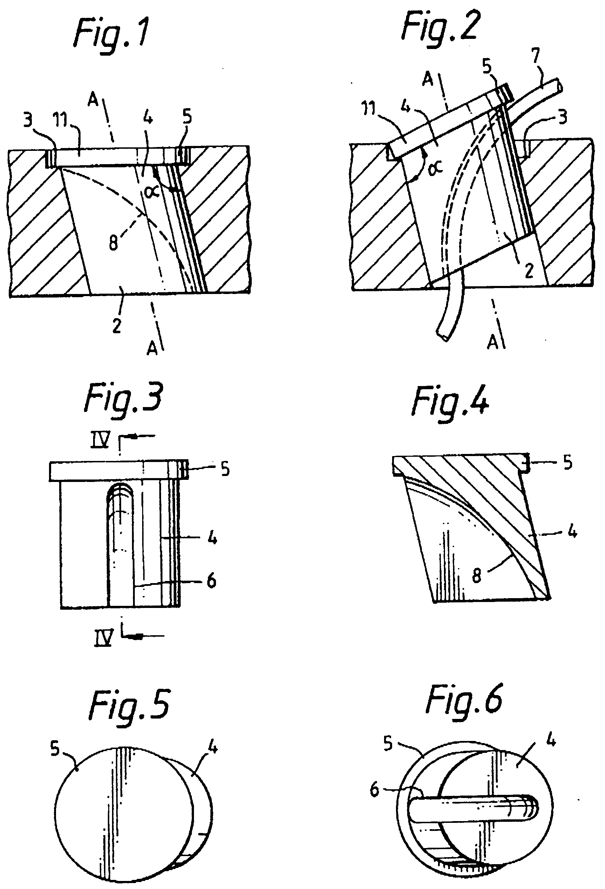

Figures 1 - 6 depict an embodiment of the invention. A cylindrical aperture 2 has been made in a floorboard 1 by boring, so that the longitudinal axis of the aperture together with the floor level form an angle α , which is bigger than 90°. A shoulder 3 circles at the top part of the aperture. Should the floorboard material so require, the inner surface of the aperture is provided with a fixed collar (not shown in the drawings). For e.g. a chipboard it will be enough just to seal it with some substance like paint or glue.

The lead-through piece 4 also has a circular cross-section to correspond with the aperture cross-section. A circular flange extends along the top part of the lead-through piece with a width and height equal to the width and height of the shoulder 3. An angle equal to the angle α between aperture 2 and the floor level is formed by the longitudinal axis of the piece and the top face of the lead-through piece.

Below the flange 5 there is a gap 6 in the lead-through piece. The top end of the gap opens in the side of the top part of the lead-through piece, below flange 5, while the lower end opens in the lower surface of the lead-through piece. The gap width is at least equal to the thickness of any conductor 7 to be fitted through the lead-through. The lower end of the gap extends across the lower face of the lead-through piece.

In the position shown in Figure 1 the lead-through piece is fitted into the floorboard aperture 2 so that the top surface of the lead-through piece is flush with the floor level, whereby flange 5 rests with its entire periphery against shoulder 3. In this way the lead-through piece closes the aperture entirely when no lead-through is required. When an electric cable 7 is to be passed through the floorboard by way of the aperture, the cable is fitted into gap 6 from the side of the lead-through piece. The lead-through piece is now fitted into the floorboard aperture to assume the position shown in Figure 2, whereby the piece is turned around its axis of rotation A, that is, its longitudinal axis, through 180° from the position of Figure 1. One edge of flange 5 hereby rests against shoulder 3, but the other edge rises above floor level so that conductor 7 can pass from the top end of the gap below the flange and extend above the floor.

Aperture 2 may be either of cylindrical shape, made by boring, or it may be a milled square or any other suitable shape, provided that the lead-through piece can be fitted into the aperture in at least two different positions. The most suitable rotational angle is 180° between these positions in relation to the longitudinal axis, but some other angle may also be used.

After changing the position of the lead-through piece from the basic position the electric cable or any other conductor can be passed through the lead-through by first lifting up the lead-through piece. There may be one conductor or several conductors, depending on the size of the lead-through.

Such a height difference exists between the top of the lead-through piece and the floor surface which clearly exceeds the thickness of the conductor or conductors. The load-through piece protects the conductor or conductors against breaking.

If the lead-through piece is of an e.g. square, hexagonal etc. shape, the lead-through piece will stay by itself in the altered position. On the other hand, a round lead-through piece in a round hole can be turned at any angle but may require locking. Locking can be arranged, for example, by making the flange with a not perfectly circular shape.

A suitable size is easily calculated for angle α between the floor level and the longitudinal axis of the lead-through piece and it depends on the proportions of the lead-through piece diameter and the conductor diameter.

Shoulder 3 may also be located below the lead-through piece, whereby no flange 5 is needed. However, the flange is a suitable protection for the conductor.

Two different height positions for the lead-through piece can be arranged not only by using a tilted aperture but also by the solutions shown in Figures 7 - 9. Seen from above there is a square aperture 2 in the floorboard with supporting projections 9 stepped at three levels along its two sides.

Seen from above, the lead-through piece 4 is also of a square shape analogous with the aperture size. There is a downward protruding support leg 10 in each top surface corner. Each leg 10 is of a rectangular cross-section so that its shorter dimension a is shorter than the length of the lowest step 9' of supporting projection 9 in the floor aperture. The longer dimension b again of the leg cross-section exceeds the step 9' length, but is still shorter than the total length of the lowest step 9' and the next step 9''.

When the floor aperture is to be closed, the lead-through piece is pushed into the aperture so that the shorter dimension a of the support legs is parallel with the sides carrying supporting projections. Hereby the support legs will be accommodated on the lowest step 9' of the supporting projections, while at the same time the bottom face of closing surface 11 of the lead-through piece will rest against the third or topmost step 9''' of the supporting projection. The lead-through piece will thus descend to its lower position, closing the aperture (Figure 7).

On the other hand, when an electric cable 7 is to be passed through the aperture, the lead-through is taken out of the aperture and turned through an angle of 90° around its rotational or vertical axis A. When the lead-through piece is lowered into the aperture in this position, the bigger dimension of its support legs will not go on the lowest step 9' of the supporting projection, but it will rest on the second step 9''. The lead-through piece will thus remain in its upper position (Figure 8) and the cable 7 will have room to pass between its support legs and continue above floor level. If desired, cables may be brought in through all four sides.

It is not necessary to use three different step levels in the supporting projections 9, but either the lowest step 9' or the top step 9''' may be eliminated. Aperture 2 and the closing surface of the lead-through piece can have another shape, for example, circular or some other equilateral polygon.

In the application shown in Figures 10 - 14 the floor aperture 2 is of a square shape seen from above. Figures 10 - 12 show the lead-through piece 4 in its closed position and it is also of a square shape as seen from above when it closes the aperture.

Seen from the side in the direction of sectional line B - B, the lead-through piece is shaped like an equilateral triangle (Figure 10). In the lead-through piece which is located down below in the closed position shown in Figures 10 and 11 a recess 12 is formed in its central part and extending upwards with triangular supporting sides 13 on both sides of it. Along two sides of the lead-through aperture there are supporting projections 9, whose top surface corresponds with the bottom triangle apex of the supporting sides 13 of the lead-through piece, thus supporting the lead-through piece in the closed position of Figure 10.

When an electric cable 7 is to be passed through the floor aperture, the lead-through piece is turned through an angle of 120° around its horizontal axis of rotation A extending at right angles through the supporting sides, so that the closing face 11 is turned sideways and that surface 14 in turned to face upwards, through which recess 12 extends (Figures 13 and 14). As the cross-section of the lead-through piece is an equilateral triangle, the supporting projections will support the lead-through piece also in this position. In this way the electric cable 7 is allowed to extend above the floor level by way of recess 12.

Figures 15 - 18 show yet another application of the invention. The floor aperture 2 is of a square shape like in the previous application and it has similar supporting projections 9 along its two sides.

Seen from the side along sectional line E - E the lead-through piece 4 is also mainly shaped like an equilateral triangle, but one of its sides is slightly convex. There is a recess 12 in one side. On turning the lead-through piece from the closed position of Figure 15 through an angle of 120° around its rotational axis A, the convex side 15 becomes the top surface rising slightly above floor level (Figure 15). Hereby electric cable 7 can be passed by way of recess 12 in one side and below the bottom surface of convex side 15 and further through the open side of the lead-through piece to extend above floor level. The convex side protects the cable from above and no aperture opening upwards is left in the floor.

The triangular or mainly triangular cross-sectional shape used for the lead-through piece in Figures 10 -18 can also be replaced with a square or mainly square shape. Likewise, the square aperture shape of these applications may be replaced with a rectangular one.

In those applications where the aperture wall is provided with projections, these projections may be made, for example, by providing the aperture with a fitting separate mounting sleeve with projections located on its inside surface. The sleeve may be supported in the aperture by a flange at the top sleeve edges resting against a shoulder at the top aperture edge.

## Claims

1. Lead-through arrangement for passing one or several conductors (7) through a floorboard (1), wherein the floorboard has an aperture (2), into which is fitted a lead-through piece (4), which protects the conductor and which is supported on a flange (5) in the lead-through piece and/or on a shoulder (3, 9) in the aperture, and wherein the lead-through piece can be fitted into the aperture in at least two positions turned in relation to its rotational axis (A), **characterized** in that in the first position of the lead-through piece (4) the closing surface (11) of the lead-through piece covers the floorboard aperture (2) and that in the second position turned in relation to the rotational axis (A) a gap is formed between the lead-through piece and the edge of the floorboard aperture, through which gap the conductor (7) can be passed to extend through the floorboard aperture.

2. Lead-through arrangement as defined in claim 1, **characterized** in that the rotational axis of the lead-through piece (4) is parallel with the longitudinal axis of the floorboard aperture (2).

3. Lead-through arrangement as defined in claim 2, **characterized** in that the top end of the lead-through channel (6) opens in the side of the lead-through piece (4) and that the lead-through piece rests in two positions turned in relation to its rotational axis in the aperture (2) at two different levels, whereby with the lead-through piece in its top position the top end of the lead-through channel in the piece opens above floor (1) level.

4. Lead-through arrangement as defined in any of claims 1 - 3, **characterized** in that the longitudinal axis (A) of the floorboard (1) aperture (2) forms an angle α with the floorboard level, which angle is bigger than 90°.

5. Lead-through arrangement as defined in claim 4, **characterized** in that the cross-sectional shape of lead-through piece (4) and opening (2) are such that the lead-through piece can be fitted into the aperture in two positions turned through an angle of 180° around the rotational axis.

6. Lead-through arrangement as defined in claim 5**, characterized** in that the cross-section of lead-through piece (4) and of opening (2) is circular.

7. Lead-through arrangement as defined in claim 2 or claim 5, characterized in that the rotational axis (A) of lead-through piece (4) and the longitudinal axis of aperture (2) are vertical and that the bottom edge of lead-through piece (4) is provided with projections (10) protruding downward and the bottom edge of floorboard aperture (2) is provided with projections (9) protruding toward the central part of the aperture, whereby in the top position of the lead-through piece the aperture projections support the projections of the lead-through piece and in the lower position of the lead-through piece the projections of the lead-through piece fit in between the aperture projections.

8. Lead-through arrangement as defined in claim 1, **characterized** in that the rotational axis (A) of lead-through piece (4) is perpendicular to the longitudinal axis of aperture (2).

9. Lead-through arrangement as defined in claim 8, **characterized** in that in the open position the lead-through channel (12) in the lead-through piece (4) opens in the top surface (14) of the lead-through piece.

10. Lead-through arrangement as defined in claim 8, **characterized** in that in the open position the lead-through channel (12) in lead-through piece (4) opens in the side of the lead-through piece, above floor (1) level.
